# EUROPÄISCHE PATENTSCHRIFT

(11) **EP 1 106 978 B1**
(45) Veröffentlichungstag und Bekanntmachung des Hinweises auf die Patenterteilung: **04.01.2006**
(21) Anmeldenummer: 00123618.1
(22) Anmeldetag: 28.10.2000
(51) Int. Cl.: G01G 9/00, G01G 21/28, G01G 23/00

(54) **Analysenwaage zur Wägung von elektrostatisch aufgeladenem Wägegut**
Analytical balance for weighing electrostatically charged goods
Balance d'analyse pour peser des produits chargés électrostatiquement

(30) Priorität: 08.11.1999 DE 19953586
(43) Veröffentlichungstag der Anmeldung: 13.06.2001
(73) Patentinhaber: SARTORIUS AG, 37075 Göttingen (DE)
(72) Erfinder: Martens, Jörg-Peter, Dr., 37120 Bovenden (DE); Feldotte, Heinrich, 37079 Göttingen (DE); Hirche, Steffen, 37075 Göttingen (DE); Bierich, Eduard, 34346 Hann. Münden (DE); Bötcher, Günter, 37120 Bovenden (DE)

(56) Entgegenhaltungen:
- CH-A- 678 570
- DE-C- 705 715
- US-A- 4 689 715
- US-A- 5 055 963
- US-A- 5 107 945

## Beschreibung

Die Erfindung bezieht sich auf eine Analysenwaage mit einer Waagschale, mit einem die Waagschale umgebenden Windschutz und mit einer Vorrichtung zur Erzeugung eines ionisierten Luftstromes zum Abbau von elektrostatischen Aufladungen des Wägegutes.

Eine Analysenwaage dieser Art ist aus der Deutschen Patentschrift 705 715 bekannt.

Dort befinden sich in einem Funkenstreckenraum, der unterhalb des Wägeraumes angeordnet ist und mit diesem durch ein Sieb verbunden ist, mehrere vertikal nach oben stehende Spitzen, die gemeinsam an eine Hochspannungsquelle angeschlossen sind. Das Sieb wirkt dabei als großflächige Gegenelektrode. Dadurch wird ein nach oben gerichteter sogenannten elektrischer Wind erzeugt, der durch die Wärmeentwicklung der Funkenstrecken noch verstärkt wird.

Dieser vertikale Luftstrom, der die Waagschale von unten trifft, führt jedoch zu einer Verschiebung des Nullpunktes der Waage und damit zu Messfehlern. Außerdem entladen sich viele lonen schon an der geerdeten metallischen Waagschale, sodass oberhalb der Waagschale zum Ableiten der elektrostatischen Aufladung des Wägegutes nur noch ein geringer Teil der erzeugten Ionen zur Verfügung steht.

Weiterhin ist es bekannt, elektrostatische Aufladungen mit einem externen Ionisationsgebläse abzubauen. Solche Geräte sind z. B. in der US-PS 2,264,495 und US-PS 4,689,715 beschrieben. Dabei wird durch ein Gebläse ein Luftstrom erzeugt und dieser Luftstrom gleichzeitig durch Hochspannungselektroden ionisiert. Wägegut könnte damit entweder zuerst außerhalb des Windschutzes der Waage mit dem Luftstrom des Ionisationsgebläses angeblasen und elektrisch entladen und dann in die Waage und auf die Waagschale gebracht werden. Oder das Wägegut könnte bei geöffnetem Windschutz auf der Waagschale mit dem Ionisationsgebläse angeblasen und entladen werden. Beide Verfahren sind umständlich in der Handhabung. Besonders wenn die Entladung des Wägegutes beim ersten Versuch noch nicht ausreichend war, erfordert das erneute Öffnen des Windschutzes, das Herausnehmen des Wägegutes und das Positionieren des Wägegutes vor dem Ionisationsgebläse (beim ersten Verfahren) bzw. das Ausrichten des Ionisationsgebläses auf das Wägegut (beim zweiten Verfahren) sowie das anschließende Wiederschließen des Windschutzes eine Vielzahl von Handbewegungen, sodass jeder Bediener der Waage bemüht ist, diese Wiederholung zu vermeiden. Der Bediener wird daher das Ionisationsgebläse beim ersten Mal zur Sicherheit lieber zu lange laufen lassen. Dadurch ergibt sich in jedem Fall eine deutliche Verlängerung der Wägezeit. Außerdem führt das Hineinblasen in den vom Windschutz umgebenen Wägeraum beim zweiten Verfahren zu einer starken Störung des thermischen Gleichgewichtes innerhalb des Windschutzes, sodass das thermische Gleichgewicht erst langsam wieder erreicht wird.

Aufgabe der Erfindung ist es daher, für eine Analysenwaage eine verbesserte Möglichkeit zum Abbau von elektrostatischen Aufladungen des Wägegutes anzugeben.

Erfindungsgemäß wird dies für eine Analysenwaage der eingangs genannten Art dadurch erreicht, dass die Vorrichtung zur Erzeugung eines ionisierten Luftstromes einen Ventilator umfasst, der an mindestens einer Begrenzungsfläche des Wägeraumes Luft aus dem Wägeraum ansaugt und über mindestens eine Ausblasöffnung an anderer Stelle wieder in den Wägeraum zurückführt.

Auf diese Weise lässt sich - verglichen mit der Analysenwaage gemäß der schon zitierten DE-PS 705 715 - eine sehr viel größere Anzahl Ionen direkt in die Nähe des Wägegutes bringen, um einen schnellen Abbau der elektrostatischen Aufladungen zu erreichen. Durch geeignete Strömungsführung lässt sich außerdem die Vertikalkomponente der Luftströmung in der Nähe der Waagschale und damit der Einfluss auf die Wägung gering halten. Durch Abschalten des Ventilators während der Wägung kann der Einfluss auf die Wägung noch einmal reduziert werden, sodass mit der erfindungsgemäßen Waage Wägungen sehr hoher Genauigkeit möglich sind.

Verglichen mit der Benutzung eines externen Ionisationsgebläses ist die Handhabung sehr stark vereinfacht, da zusätzlich zum normalen Auflegen des Wägegutes auf die Waagschale nur die erfindungsgemäß Ionisationsverrichtung - z. B. per Tastendruck - gestartet werden muss. Diese erfindungsgemäße Ionisationsvorrichtung wird bei geschlossenem Windschutz betrieben und bläst keine Luft aus der Umgebung - die evtl. eine andere Temperatur aufweist - in den Wägeraum, sondern wälzt die Luft nur innerhalb des Wägeraumes um.

Einen besonders sicheren Abbau sowohl positiver als auch negativer elektrostatischer Aufladungen erhält man, wenn die Vorrichtung zur Erzeugung eines ionisierten Luftstromes sowohl positive als auch negative Ionen erzeugt. Dazu weist sie vorteilhafterweise mindestens zwei Spitzenelektroden auf, die Spannungen verschiedenen Vorzeichens gegenüber der jeweiligen Gegenelektrode aufweisen.

Weitere vorteilhafte Ausgestaltungen ergeben sich aus den Unteransprüchen.

Die Erfindung wird im folgenden anhand der schematischen Figuren beschrieben. Dabei zeigt:
- Figur 1: eine Prinzipdarstellung der Waage im Schnitt,
- Figur 2: eine perspektivische Ansicht der Waage,
- Figur 3: eine vorteilhafte Form und Anordnung der Elektroden zur Ionisation,
- Figur 4: eine vorteilhafte Ausgestaltung der Vorrichtung zur Erzeugung des ionisierten Luftstromes,
- Figur 5: einen Schnitt längs der LinieV - V in Figur 4,
- Figur 6: eine vorteilhafte Gestaltung der Waagschale und
- Figur 7: einen Aufsatz auf eine Standardwaagschale.

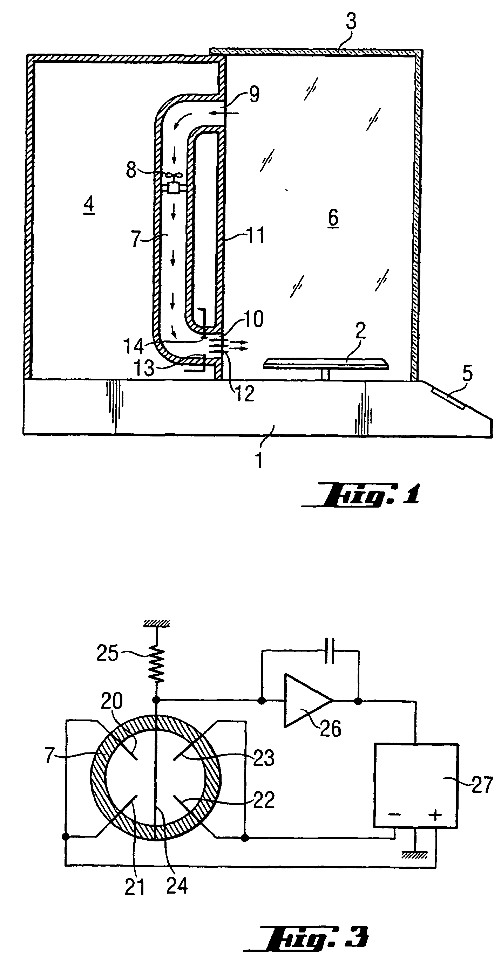

In Figur 1 sind die für die Erfindung wesentlichen Teile der Waage zur Erläuterung des Wirkungsprinzipes in vertikaler Schnittdarstellung gezeigt. Die Waage besteht aus einem Unterbau 1, der das (bekannte und daher nicht dargestellte) Wägesystem umschließt, einer Waagschale 2 zur Aufnahme des Wägegutes, einem Windschutz 3, der den Wägeraum 6 allseitig umgibt, einer Anzeige 5 zur Anzeige des Wägeergebnisses und einem rückwärtigen Gehäuseoberteil 4, das z. B. Teile der Elektronik der Waage aufnehmen kann. Diese Teile der Waage sind allgemein bekannt und daher nicht näher erläutert.

Im rückwärtigen Gehäuseoberteil 4 ist nun ein Rohr 7 mit einem eingebauten Ventilator 8 angeordnet. Oben endet das Rohr 7 in einer Ansaugöffnung 9 in der Rückwand 11 des Wägeraumes. Unten endet das Rohr 7 in einer Ausblasöffnung 10 in der Rückwand 11 des Wägeraumes. Die Förderrichtung des Ventilators ist dementsprechend von oben nach unten. Die Ausblasöffnung 10 weist Lamellen 12 auf (nicht nur - wie gezeichnet - in waagerechter Richtung, sondern auch in vertikaler Richtung), die den austretenden Luftstrom auffächern und in definierte Richtungen leiten. Diese Lamellen 12 können bei Bedarf verstellbar sein und so eine Anpassung an verschieden große und hohe Wägegüter erlauben. Die Hochspannungselektroden zur Ionisierung des Luftstromes sind mit 13 und 14 bezeichnet; dabei ist die Elektrode 13 eine Spitzenelektrode und die Elektrode 14 eine vergleichsweise großflächige Gegenelektrode, beispielsweise in Form einer kleinen Platte oder eines Drahtringes. Falls das Rohr 7 ein Metallrohr ist, kann dieses Metallrohr direkt als großflächige Gegenelektrode 14 fungieren. Die Schaltung zur Erzeugung der Hochspannung sowie die Zuleitungen zu den Elektroden 13 und 14 sind der Übersichtlichkeit halber in der Prinzipdarstellung in Figur 1 weggelassen worden; dasselbe gilt für die Zuleitungen und die Spannungsversorgung für den Motor des Ventilators 8.

Im Betrieb saugt der Ventilator an der Ansaugöffnung 9 Luft aus dem Wägeraum 6 an, reichert diese Luft beim Vorbeistreichen an den Hochspannungselektroden 13/14 mit Ionen an und bläst diese elektrisch leitfähig gemachte Luft aus der Ausblasöffnung 10 aus und verteilt diese Luft im Raum oberhalb der Waagschale 2, wo das elektrisch zu entladende Wägegut angeordnet ist. Eine Entladung der Ionen an der metallischen Waagschale 2 wird dadurch weitgehend vermieden. Da der Luftumsatz durch den Ventilator wesentlich größer ist als der Luftumsatz aufgrund der Konvektion gemäß dem Stand der Technik, ist die Abführung der elektrostatischen Ladungen des Wägegutes viel effektiver als bei der bekannten Waage. Außerdem übt der vorwiegend waagerechte Luftstrom kaum vertikale Kräfte auf die Waagschale 2 aus, sodass die Beeinflussung des Wägeergebnisses gering ist. Zusätzlich kann der Ventilator 8 ausgeschaltet werden. Der Strömungswiderstand der stillstehenden Ventilator-Propeller sorgt dann dafür, dass die Luftströmung durch das Rohr 7 praktisch augenblicklich zur Ruhe kommt und im Wägeraum keine Luftumwälzung mehr stattfindet. Die vorhergehende Luftumwälzung durch den Ventilator 8 sorgt vielmehr dafür, dass sich im Wägeraum 6 praktisch keine Temperatur-Gradienten aufbauen, sodass nach dem Abschalten des Ventilators auch die verbleibende thermische Konvektion minimal ist. Wird der Ventilator 8 nach dem Schließen des Wägeraumes 6 für z. B. 20 Sekunden eingeschaltet, so wird in dieser Zeit ein praktisch vollständiger Abbau einer evtl. vorhandenen elektrostatischen Aufladung des Wägegutes erreicht und zusätzlich der Aufbau eines thermischen Gradienten verhindert, sodass anschließend ideale Bedingungen für hochgenaue Wägungen herrschen.

Eine wirkliche Bauform der elektronischen Waage ist perspektivisch in Figur 2 dargestellt. Gleiche Teile wie in der Prinzipdarstellung von Figur 1 sind mit den gleichen Bezugszahlen bezeichnet, auch wenn die zeichnerische Darstellung differiert. Vom Windschutz, der den Wägeraum umschließt, ist in Figur 2 die rechte Schiebetür 30, die linke Schiebetür 31, die geöffnet gezeichnet ist, die obere Begrenzung 32 und die (feststehende) Rückwand 11 erkennbar; die vordere durchsichtige Wand des Windschutzes erkennt man nur anhand der linken Seitenkante 33. In der oberen Ansaugöffnung 9 erkennt man Schutzstege 19, die den Eintritt von größeren Teilchen und damit eine Beschädigung des Ventilators verhindern. Für den Austritt der ionisierten Luft sind zwei Austrittsöffnungen 10' und 10" vorhanden, in denen man Lamellen 12' und 12" zur Lenkung des Luftstromes erkennt. Die Ionisationselektroden sind in Figur 2 nicht erkennbar; sie werden anhand von Figur 3 beschrieben.

Figur 3 zeigt einen Schnitt durch das Rohr 7 mit den eingebauten Hochspannungselektroden zur Ionisation in einer vorteilhaften Form und Anordnung. Die Elektrodenanordnung enthält zwei Spitzen 20 und 21, die mit dem positiven Pol einer Hochspannungsquelle 27 verbunden sind, und zwei Spitzen 22 und 23, die mit dem negativen Pol der Hochspannungsquelle 27 verbunden sind. Zwischen den beiden Spitzenpaaren befindet sich eine Gegenelektrode 24 - beispielsweise in Form eines Drahtes oder eines Bleches - , die über einen Widerstand 25 geerdet ist. Die positive und die negative Spannung der Hochspannungsquelle 27 ist so groß, dass gerade noch keine Funkenentladung auftritt, sondern nur eine sogenannte stille Entladung. Die beiden Spannungen der Hochspannungsquelle 27 werden dabei durch einen Regler 26 so geregelt, dass der Strom durch den Widerstand 25 null ist. Dadurch wird sichergestellt, dass unabhängig von Toleranzen der Elektrodengeometrie und unabhängig von Alterungserscheinungen (z. B. Verdrecken der Elektroden) über beide Paare von Spitzenelektroden 20 und 21 sowie 22 und 23 jeweils der gleiche Strom fließt, damit näherungsweise auch gleich viele positive und negative Ionen erzeugt werden. Dadurch enthält der durch die Ausblasöffnung 10' und 10" austretende Luftstrom sowohl positive als auch negative Ionen. Dadurch kann sowohl positiv als auch negativ aufgeladenes Wägegut entladen werden.

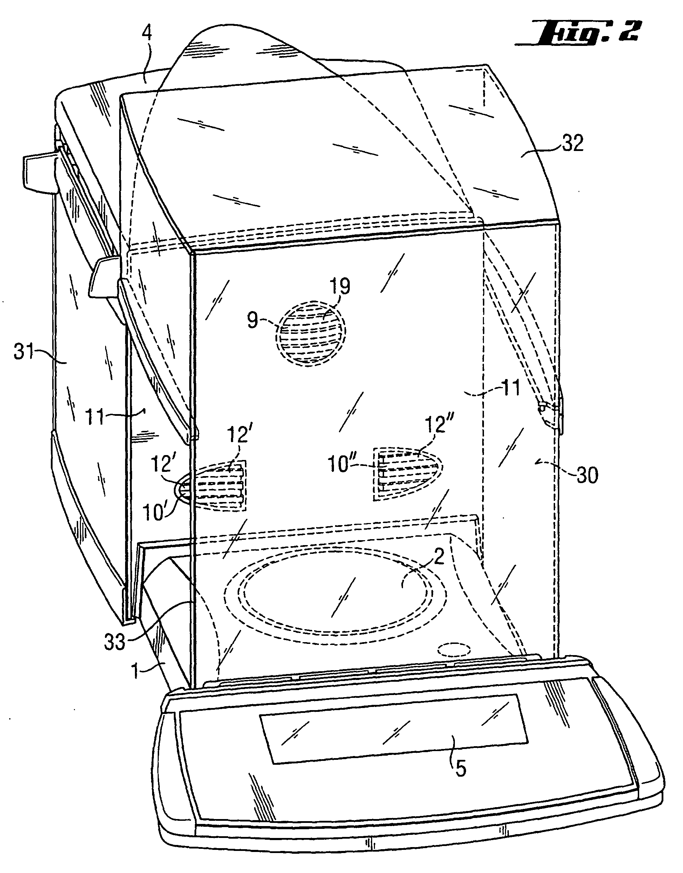

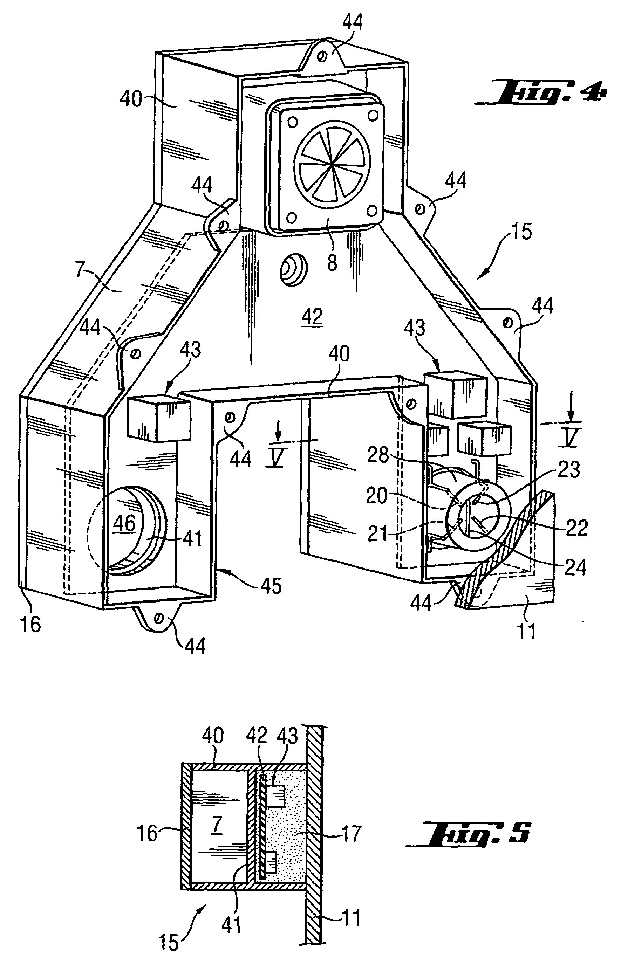

Eine vorteilhafte und kompakte Ausgestaltung der Vorrichtung zur Erzeugung eines ionisierten Luftstromes ist in den Figuren 4 und 5 gezeigt. Figur 4 ist eine perspektivische Ansicht, Figur 5 ein Schnitt längs der gestrichelten Linie V - V in Figur 4. Man erkennt in den Figuren ein Y-förmiges Formteil 15, das im Wesentlichen aus einem umlaufenden Rahmen 40 besteht und einem Zwischenboden 41, der sich etwa auf halber Höhe des Rahmens 40 befindet. Dieser Zwischenboden 41 ist praktisch nur in Figur 5 erkennbar, in Figur 4 ist er unter der Elektronikplatine 42 verborgen, die zusammen mit dem Ventilator 8 praktisch den ganzen Innenraum des Formteiles 15 einnimmt. Die sich auf der Elektronikplatine 42 befindlichen elektronischen Bauelemente sind durch die Quader 43 nur beispielhaft angedeutet, in Wirklichkeit ist die ganze Elektronikplatine 42 mit Bauelementen bestückt.

Der Zwischenboden 41 teilt den Innenraum des Formteiles 15 in zwei Bereiche: Einen (in Figur 4 vorderen bzw. in Figur 5 rechten) Bereich für die Elektronik, und einen (in Figur 4 nicht erkennbaren hinteren bzw. in Figur 5 linken) Bereich, der den Luftkanal 7 darstellt, der vom Ventilator 8 zu den Hochspannungselektroden 20 ... 24 führt. Im Bereich des Ventilators 8 ist der Zwischenboden 41 durchbrochen, genauso im Bereich der Hochspannungselektroden. In Figur 4 ist dies dadurch erkennbar, dass im linken Schenkel 45 des Y-förmigen Formteils 15 die Hochspannungselektroden mitsamt ihrem Halter 28 nicht eingezeichnet sind, sodass das Loch 46 im Zwischenboden 41 an dieser Stelle erkennbar ist. In Wirklichkeit sind natürlich auch im linken Schenkel 45 ein Elektrodenhalter 28 und Hochspannungselektroden 20... 24 vorhanden. Ebenso ist der Querschnitt durch den linken Schenkel 45 genauso wie der (in Figur 5 dargestellte) Querschnitt durch den rechten Schenkel. Das Formteil 15 wird an seiner (in Figur 4 hinteren bzw. in Figur 5 linken) Endfläche von einem Deckel 16 gleicher Form abgeschlossen. Das Formteil 15 mitsamt Lüfter 8 und Elektrodenhalter 28 ist mittels Laschen 44 mit Löchern an der dem Wägeraum 6 abgewandten Rückseite der Rückwand 11 des Windschutzes angeschraubt, wie es in Figur 5 erkennbar ist; und zwar so, dass sich der Lüfter 8 direkt hinter der Ansaugöffnung 9 befindet, während die beiden Elektrodenhalter 28 mit den Hochspannungselektroden hinter den beiden Ausblasöffnungen 10' und 10" in Figur 2 zu liegen kommen. Der Ventilator 8 saugt damit im Betrieb Luft durch die Ansaugöffnung 9 aus dem Wägeraum 6 an, transportiert sie nach hinten in den Luftkanal 7 zwischen dem Zwischenboden 41 des Formteils 15 und dem Deckel 16 und drückt die Luft durch das Loch 46, das Innere des Elektrodenhalters 28 mitsamt den Hochspannungselektroden 20 ... 24 und schließlich durch die Ausblasöffnung 10' bzw. 10" wieder in den Wägeraum 6 zurück.

Der Raum oberhalb der Elektronikplatine 42 und um diese herum wird vorteilhafterweise ganz mit einer Vergussmasse 17, die in Figur 5 durch Pünktchen angedeutet ist, gefüllt. Das Gehäuse des Ventilators 8 und der Elektrodenhalter 28 verhindern dabei, dass die Vergussmasse durch das Loch im Zwischenboden 41 unterhalb des Ventilators 8 und durch die Löcher 46 unterhalb der Elektrodenhalter 28 abfließen kann. Der umlaufende Rahmen 40 wirkt beim Einf-tillen der Vergussmasse als seitliche Begrenzung.

Die Rückwand 11 weist auf ihrer dem Wägeraum 6 abgewandten Rückseite vorteilhafterweise um die Ansaugöffnung 9 und um die Ausblasöffnungen 10' und 10" herum je einen umlaufenden Wulst auf, der im Zusammenwirken mit der elastischen Vergussmasse 17 die Ansaugöffnung 9 und die Ausblasöffnungen 10' und 10" gegen die Umgebung abdichtet.

Die im vorstehenden beschriebene Vorrichtung zur Erzeugung eines ionisierten Luftstromes kann selbstverständlich noch mit vielen vorteilhaften Details verbessert werden:
- So kann z. B. der Ventilator 8 eine regelbare Drehzahl haben. Dadurch lässt er sich sowohl an stark aufgeladenes Wägegut (große Drehzahl mit starker Luftumwälzung) anpassen als auch an hohe Ansprüche an die Wägegenauigkeit und kurze Beruhigungszeit nach dem Ausschalten (kleine Drehzahl mit geringer Luftumwälzung); evtl. besteht sogar die Möglichkeit, bei langsam laufendem Ventilator zu wiegen.
- Das Einschalten des Ventilators kann z. B. durch einen elektrischen Kontakt oder durch eine Lichtschranke dann erfolgen, wenn die Seitenwand 30 oder 31 oder die obere Wägeraumbegrenzung 32 geschlossen wird. Das Ausschalten erfolgt dann nach einer vorgegebenen Laufzeit. - Selbstverständlich ist es auch möglich, im Rahmen der Bedienungstastatur der Waage eine Taste, bzw. einen Schalter zum manuellen Ein-/Ausschalten des Ventilators vorzusehen. Die Hochspannungsquelle 27 wird im allgemeinen zusammen mit dem Ventilator ein-/ausgeschaltet; sie kann jedoch auch getrennt geschaltet werden.
- Beim Regler 26 kann der Offset (elektrischer Nullpunkt) so verschoben sein, dass er nicht auf die Spannung null am Widerstand 25 regelt, sondern auf einen vorgegebenen positiven oder negativen Spannungswert. Dadurch wird der Strom über ein Elektrodenpaar 20/21 bzw. 22/23 größer als der Strom über das andere Elektrodenpaar. Auf diese Weise werden bevorzugt Ionen eines Vorzeichens erzeugt und die Entladungswirkung für die elektrostatische Aufladung des Wägegutes mit dem entgegengesetzten Vorzeichens vergrößert. Dies ist sinnvoll, wenn gleichartige Proben verwogen werden, bei denen das Vorzeichen der Aufladung konstant und bekannt ist.
- Die Lamellen 12 bzw. 12' und 12" können verstellbar sein, um den ionisierten Luftstrom an verschieden breite und hohe Wägegüter anpassen zu können.

Insgesamt bildet die beschriebene Vorrichtung zur Erzeugung eines ionisierten Luftstromes eine Kompaktbaueinheit, die alle für die Ionisierung notwendigen Baugruppen enthält. Im Rahmen eines Baukastensystem kann daher eine Analysenwaage mit nur wenigen Eingriffen mit oder ohne Vorrichtung zur Erzeugung eines ionisierten Luftstromes ausgerüstet werden. Ggf. ist auch eine spätere Nachrüstung mit der Vorrichtung zur Erzeugung eines ionisierten Luftstromes möglich.

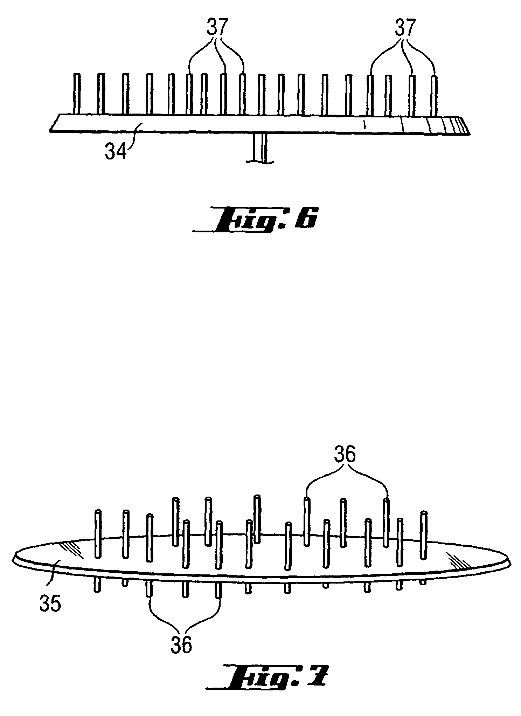

Eine für elektrostatisch aufgeladenes Wägegut besonders vorteilhafte Ausgestaltung der Waagschale ist in Figur 6 gezeigt. Diese Waagschale 34 weist auf der Oberseite eine Vielzahl von dünnen, vertikalen Metallstiften 37 auf - ähnlich einem Nagelbrett. Das Wägegut steht dadurch auf diesen Stiften 37 und kann auch auf der Unterseite vom ionisierten Luftstrom umströmt und damit entladen werden. Die metallische Waagschale und die metallischen Stifte verursachen zwar die Entladung von vielen Ionen. Durch die große Anzahl von vorhandenen Ionen und den guten Transport der ionisierten Luft reichen die restlichen, noch vorhandenen Ionen jedoch für eine Entladung des Wägegutes aus.

In Figur 7 ist eine Variante der Nagelbrettwaagschale in einer perspektivischen Ansicht gezeigt. Hier wird eine Scheibe 35, die sowohl auf der Oberseite, als auch auf der Unterseite vertikale Metallstifte 36 aufweist, auf die normale Waagschale 2 (in Figur 1 bzw. 2) gelegt. Dadurch wird wieder die Umströmung des Wägegutes mit ionisierter Luft von allen Seiten ermöglicht.

## Patentansprüche

1. Analysenwaage mit einer Waagschale, mit einem die Waagschale umgebenden Windschutz und mit einer Vorrichtung zur Erzeugung eines ionisierten Luftstromes zum Abbau von elektrostatischen Aufladungen des Wägegutes, **dadurch gekennzeichnet, dass** die Vorrichtung zur Erzeugung eines ionisierten Luftstromes einen Ventilator (8) umfasst, der an mindestens einer Begrenzungsfläche (11) des Wägeraumes (6) Luft aus dem Wägeraum ansaugt und über mindestens eine Ausblasöffnung (10, 10', 10") an anderer Stelle wieder in den Wägeraum zurückführt.

2. Analysenwaage nach Anspruch 1, **dadurch gekennzeichnet, dass** Hochspannungselektroden (13,14, 20-24) zur Ionisierung zwischen dem Ventilator (8) und der Ausblasöffnung (10, 10', 10") angeordnet sind.

3. Analysenwaage nach einem der Ansprüche 1 oder 2, **dadurch gekennzeichnet, dass** die Vorrichtung zur Erzeugung eines ionisierten Luftstromes sowohl positiv geladene als auch negativ geladene Ionen erzeugt und dazu mindestens zwei Spitzen (20, 21 und 22, 23) als Hochspannungselektroden aufweist, die gegenüber ihrer Gegenelektrode (24) Spannungen verschiedenen Vorzeichens aufweisen.

4. Analysenwaage nach Anspruch 3, **dadurch gekennzeichnet, dass** die beiden Hochspannungsquellen (27) verschiedenen Vorzeichens so geregelt werden, dass der Entladungsstrom über die positiven Spitzenelektroden (20, 21) genauso groß ist wie der Entladungsstrom über die negativen Spitzenelektroden (22, 23).

5. Analysenwaage nach Anspruch 3, **dadurch gekennzeichnet, dass** die beiden Hochspannungsquellen (27) verschiedenen Vorzeichens so geregelt werden, dass die Differenz der Entladungsströme über die positiven Spitzenelektroden (20, 21) und über die negativen Spitzenelektroden (22, 23) einen konstanten Wert annimmt.

6. Analysenwaage nach einem der Ansprüche 1 bis 5, **dadurch gekennzeichnet, dass** die Hochspannung in der Vorrichtung zur Erzeugung eines ionisierten Luftstromes so gering ist, dass noch keine Funkenentladung auftritt.

7. Analysenwaage nach einem der Ansprüche 1 bis 6, **dadurch gekennzeichnet, dass** die Ansaugöffnung(en) (9) sich im oberen Bereich der Rückwand (11) des Wägeraumes (6) befindet/befinden.

8. Analysenwaage nach einem der Ansprüche 1 bis 7, **dadurch gekennzeichnet, dass** die Ausblasöffnung(en) (10, 10', 10") sich im unteren Bereich der Rückwand (11) des Wägeraumes (6) befindet/befinden.

9. Analysenwaage nach einem der Ansprüche 1 bis 8, **dadurch gekennzeichnet, dass** die Ausblasöffnung(en) (10, 10', 10") sich etwas oberhalb der Waagschale (2) befindet/befinden.

10. Analysenwaage nach einem der Ansprüche 1 bis 9, **dadurch gekennzeichnet, dass** die Ausblasöffnungen (10, 10', 10") Hilfsmittel wie z. B. Lamellen (12, 12', 12") aufweisen, die den ionisierten Luftstrom in eine Vorzugsrichtung lenken.

11. Analysenwaage nach Anspruch 10, **dadurch gekennzeichnet, dass** die Hilfsmittel (12, 12', 12"), die den ionisierten Luftstrom in eine Vorzugsrichtung lenken, verstellbar sind.

12. Analysenwaage nach einem der Ansprüche 1 bis 11, **dadurch gekennzeichnet, dass** der Ventilator (8) regelbar ist.

13. Analysenwaage nach einem der Ansprüche 1 bis 12, **dadurch gekennzeichnet, dass** der Ventilator (8) für eine vorgebbare Zeitdauer einschaltbar ist.

14. Analysenwaage nach Anspruch 13, **dadurch gekennzeichnet, dass** der Ventilator (8) durch einen Kontakt bzw. eine Lichtschranke an einer der verschiebbaren Wägeraumbegrenzungen (30, 31, 32) eingeschaltet wird und nach Ablauf der vorgebbaren Zeitdauer wieder ausgeschaltet wird.

15. Analysenwaage nach einem der Ansprüche 7 bis 14, **dadurch gekennzeichnet, dass** an der dem Wägeraum (6) abgewandten Rückseite der Rückwand (11) ein Formteil (15) angebracht ist, das sowohl die für die Führung der Luft zwischen der/den Ansaugöffnung(en) (9) und der/den Ausblasöffnung(en) (10, 10', 10") notwendigen Kanäle (7) als auch Befestigungspunkte für den Ventilator, als auch Platz für die Hochspannungsquelle(en) (27) und ggf. auch die Regelelektronik (26) zur Verfügung stellt.

16. Analysenwaage nach Anspruch 15, **dadurch gekennzeichnet, dass** das Formteil (15) im Querschnitt H-förmig ausgebildet ist, sodass zwei Kammern gebildet werden, dass die Hochspannungsquelle(n) (27) in der einen, näher zur Rückwand liegenden Kammer untergebracht ist/sind und dass die andere, von der Rückwand entfernt liegende Kammer den Kanal (7) zur Führung der Luft darstellt.

17. Analysenwaage nach Anspruch 16, **dadurch gekennzeichnet, dass** das Formteil (15) auf seiner von der Rückwand (11) abgewandten Seite durch einen Deckel (16) abgeschlossen ist.

18. Analysenwaage nach einem der Ansprüche 15 bis 17, **dadurch gekennzeichnet, dass** das Formteil (15) Y-förmig ausgebildet ist und eine Ansaugöffnung (9) mit zwei Ausblasöffnungen (10', 10") verbindet.

19. Analysenwaage nach einem der Ansprüche 15 bis 18, **dadurch gekennzeichnet, dass** die Hochspannungsquelle(n) (27) im Formteil (15) eingegossen ist/sind und dass das Formteil (15) gleichzeitig die Gießform bildet.

20. Analysenwaage nach Anspruch 19, **dadurch gekennzeichnet, dass** die Vergussmasse elastisch ist und gleichzeitig die Dichtung zwischen dem Formteil (15) und der Rückwand (11) bildet.

21. Analysenwaage nach einem der Ansprüche 1 bis 20, **dadurch gekennzeichnet, dass** die Waagschale (34) auf ihrer Oberseite eine Vielzahl von vertikalen Metallstiften (37) aufweist.

22. Analysenwaage nach einem der Ansprüche 1 bis 20, **dadurch gekennzeichnet, dass** auf die Waagschale (2) eine Scheibe (35) auflegbar ist, die sowohl auf ihrer Oberseite als auch auf ihrer Unterseite eine Vielzahl von vertikalen Metallstiften (36) aufweist.

## Claims

1. Analytical balance with a weighing pan, with a wind protection surrounding the weighing pan and with a device for producing an ionised air flow for breaking down electrostatic charges of the stock to be weighed, **characterised in that** the device for producing an ionised air flow comprises a fan (8), which at at least one boundary surface (11) of the weighing chamber (6) sucks air out of the weighing chamber and feeds it back again into the weighing chamber by way of at least one outflow opening (10, 10', 10") at another location.

2. Analytical balance according to claim 1, **characterised in that** high-voltage electrodes (13, 14, 20-24) for the ionisation are arranged between the fan (8) and the outflow opening (10, 10', 10").

3. Analytical balance according to one of claims 1 and 2, **characterised in that** the device for producing an ionised air flow produces not only positively charged ions, but also negatively charged ions and for that purpose has at least two points (20, 21 and 22, 23) as high-voltage electrodes, which have voltages of different sign relative to their counter-electrodes (24).

4. Analytical balance according to claim 3, **characterised in that** the two high-voltage sources (27) of different sign are so regulated that the discharge current across the positive point electrodes (20, 21) is exactly the same size as the discharge current across the negative point electrodes (22, 23).

5. Analytical balance according to claim 3, **characterised in that** the two high-voltage sources (27) of different sign are so regulated that the difference of the discharge currents across the positive point electrodes (20, 21) and across the negative point electrodes (22, 23) adopts a constant value.

6. Analytical balance according to one of claims 1 to 5, **characterised in that** the high voltage in the device for producing an ionised air flow is so small that still no spark discharge occurs.

7. Analytical balance according to one of claims 1 to 6, **characterised in that** the suction opening or openings (9) is or are disposed in the upper region of the back wall (11) of the weighing chamber (6).

8. Analytical balance according to one of claims 1 to 7, **characterised in that** the outflow opening or openings (10, 10', 10") is or are disposed in the lower region of the back wall (11) of the weighing chamber (6).

9. Analytical balance according to one of claims 1 to 8, **characterised in that** the outflow opening or openings (10, 10', 10") is or are disposed somewhat above the weighing pan (2).

10. Analytical balance according to one of claims 1 to 9, **characterised in that** the outflow openings (10, 10', 10") comprise auxiliary means such as, for example, platelets (12, 12', 12"), which deflect the ionised air flow in a preferential direction.

11. Analytical balance according to claim 10, **characterised in that** the auxiliary means (12, 12', 12") deflecting the ionised air flow in a preferential direction are adjustable.

12. Analytical balance according to one of claims 1 to 11, **characterised in that** the fan (8) can be regulated.

13. Analytical balance according to one of claims 1 to 12, **characterised in that** the fan (8) can be switched on for a predeterminable period of time.

14. Analytical balance according to claim 13, **characterised in that** the fan (8) is switched on by a contact or a light barrier at one of the displaceable weighing chamber boundaries (30, 31, 32) and is switched off again after expiry of the predeterminable period of time.

15. Analytical balance according to one of claims 7 to 14, **characterised in that** a shaped part (15) is mounted at the rear side of the back wall (11) remote from the weighing chamber (6) and not only provides the channels (7) necessary for guidance of the air between the suction opening or openings (9) and the outflow opening or openings (10, 10', 10"), but also fastening points for the fan and also space for the high-voltage source or sources (27) and optionally also the electronic regulating system (26).

16. Analytical balance according to claim 15, **characterised in that** the shaped part (15) is formed to be H-shaped in cross-section so that two chambers are formed, that the high voltage source or sources (27) is or are accommodated in a chamber disposed closer to the back wall and that the other chamber disposed remote from the back wall represents the channel (7) for guidance of the air.

17. Analytical balance according to claim 16, **characterised in that** the shaped part (15) is closed off on its side remote from the back wall (11) by a cover (16).

18. Analytical balance according to one of claims 15 to 17, **characterised in that** the shaped part (15) is of Y-shaped construction and connects a suction opening (9) with two outflow openings (10', 10").

19. Analytical balance according to one of claims 15 to 18, **characterised in that** the high-voltage source or sources (27) is or are cast in place in the shaped part (15) and that the shaped part (15) at the same time forms the casting mould.

20. Analytical balance according to claim 19, **characterised in that** the casting mass is resilient and at the same time forms the seal between the shaped part (15) and the back wall (11).

21. Analytical balance according to one of claims 1 to 20, **characterised in that** the weighing pan (34) has on its upper side a plurality of vertical metal pins (37).

22. Analytical balance according to one of claims 1 to 20, **characterised in that** a disc (35) can be placed on the weighing pan (2) and has a plurality of vertical metal pins (36) not only on its upper side, but also on its lower side.

## Revendications

1. Balance de précision avec un plateau de balance, avec un paravent entourant le plateau de balance et avec un dispositif pour la production d'un courant d'air ionisé pour la suppression de charges électrostatiques du bien à peser, **caractérisée en ce que** le dispositif pour la production d'un courant d'air ionisé comprend un ventilateur (8), qui aspire de l'air à au moins une surface de délimitation (11) de l'espace pour peser (6) hors de l'espace pour peser et le reconduit à un autre endroit dans l'espace pour peser par au moins un orifice de soufflage (10, 10', 10'').

2. Balance de précision selon la revendication 1, **caractérisée en ce que** des électrodes à haute tension (13, 14, 20-24) sont disposées pour l'ionisation entre le ventilateur (8) et l'orifice de soufflage (10, 10', 10'').

3. Balance de précision selon l'une quelconque des revendications 1 ou 2, **caractérisée en ce que** le dispositif pour la production d'un courant d'air ionisé produit aussi bien des ions chargés positivement que des ions chargés négativement et comporte à cet effet au moins deux pointes (20, 21 et 22, 23) comme électrodes à haute tension, qui comportent par rapport à leur électrode opposée (24) des tensions de différents signes de polarité.

4. Balance de précision selon la revendication 3, **caractérisée en ce que** les deux sources à haute tension (27) à signes de polarité différents sont réglées de manière à ce que le courant de décharge par les électrodes à pointe positives (20, 21) est aussi grand que le courant de décharge par les électrodes à pointe négatives (22, 23).

5. Balance de précision selon la revendication 3, **caractérisée en ce que** les deux sources à haute tension (27) de signes de polarité différents sont réglées de manière à ce que la différence des courants de décharge par les électrodes à pointe positives (20, 21) et par les électrodes à pointe négatives (22, 23) prend une valeur constante.

6. Balance de précision selon l'une quelconque des revendications 1 à 5, **caractérisée en ce que** la haute tension dans le dispositif de production d'un courant d'air ionisé est tellement faible que n'intervient encore aucune décharge disruptive.

7. Balance de précision selon l'une quelconque des revendications 1 à 6, **caractérisée en ce que** le ou les orifice(s) d'aspiration (9) se trouve(nt) dans la zone supérieure de la paroi arrière (11) de l'espace pour peser (6).

8. Balance de précision selon l'une quelconque des revendications 1 à 7, **caractérisée en ce que** le ou les orifice(s) de soufflage (10, 10', 10'') se trouve(nt) dans la zone inférieure de la paroi arrière (11) de l'espace pour peser (6).

9. Balance de précision selon l'une quelconque des revendications 1 à 8, **caractérisée en ce que** le ou les orifice (s) de soufflage (10, 10' , 10") se trouve(nt) un peu au-dessus du plateau de balance (2).

10. Balance de précision selon l'une quelconque des revendications 1 à 9, **caractérisée en ce que** le ou les orifice(s) de soufflage (10, 10', 10") comportent des moyens d'assistance comme par exemple des lamelles (12, 12' , 12") qui dévient le courant d'air ionisé dans une direction privilégiée.

11. Balance de précision selon la revendication 10, **caractérisée en ce que** les moyens d'assistance (12, 12', 12") qui dévient le courant d'air ionisé dans une direction privilégiée, peuvent être réglés.

12. Balance de précision selon l'une quelconque des revendications 1 à 11, **caractérisée en ce que** le ventilateur (8) peut être réglé.

13. Balance de précision selon l'une quelconque des revendications 1 à 12, **caractérisée en ce que** le ventilateur (8) peut être mis sous tension pour une durée prescriptible.

14. Balance de précision selon la revendication 13, **caractérisée en ce que** le ventilateur (8) est mis sous tension par un contact ou une barrière lumineuse située à une des limites repoussables de l'espace pour peser (30, 31, 32) et est de nouveau mis hors tension après l'écoulement de la durée prescriptible.

15. Balance de précision selon l'une quelconque des revendications 7 à 14, **caractérisée en ce que** sur la face arrière de la paroi arrière (11) opposée à l'espace pour peser (6) est appliquée une pièce moulée (15) qui met à disposition aussi bien les canaux (7) nécessaires au transport de l'air entre le/les orifice(s) d'aspiration (9) et le/les orifice(s) de soufflage (10, 10', 10'') que des points de fixation pour le ventilateur, de même que de la place pour la(s) source(s) à haute tension (27) et éventuellement aussi pour le système électronique de réglage (26).

16. Balance de précision selon la revendication 15, **caractérisée en ce que** la pièce moulée (15) est conçue dans sa section transversale en forme de H, de telle sorte que deux chambres sont constituées, que la(s) source(s) à haute tension (27) est/sont logée(s) dans une des chambres située le plus près de la paroi arrière et que l'autre chambre, éloignée de la paroi arrière, représente le canal (7) pour le transport de l'air.

17. Balance de précision selon la revendication 16, **caractérisée en ce que** la pièce moulée (15) est fermée sur sa face opposée à la paroi arrière (11) par un couvercle (16).

18. Balance de précision selon l'une quelconque des revendications 15 à 17, **caractérisée en ce que** la pièce moulée (15) est conçue en forme de Y et relie un orifice d'aspiration (9) à deux orifices de soufflage (10', 10").

19. Balance de précision selon l'une quelconque des revendications 15 à 18, **caractérisée en ce que** la/les source(s) à haute tension (27) est/sont moulées dans la pièce moulée (15) et **en ce que** la pièce moulée (15) constitue en même temps le moule de coulage.

20. Balance de précision selon la revendication 19, **caractérisé en ce que** la masse de garnissage est élastique et constitue en même temps l'étanchéité entre la pièce moulée (15) et la paroi arrière (11).

21. Balance de précision selon l'une quelconque des revendications 1 à 20, **caractérisée en ce que** le plateau de balance (34) comporte sur sa face supérieure une pluralité de chevilles métalliques verticales (37).

22. Balance de précision selon l'une quelconque des revendications 1 à 20, **caractérisée en ce que** sur le plateau de balance (2) peut être posé un disque (35), qui comporte aussi bien sur sa face supérieure que sur sa face inférieure une pluralité de chevilles métalliques verticales (36).
